# EUROPEAN PATENT SPECIFICATION

(11) **EP 0 958 257 B1**
(45) Date of publication and mention of the grant of the patent: **20.10.2004**
(21) Application number: 97912345.2
(22) Date of filing: 13.11.1997
(51) Int. Cl.: C04B 26/04

(54) **MIXTURES OF MATERIALS SETTABLE ON EXPOSURE TO ATMOSPHERE**
DURCH SAUERSTOFF HÄRTBARE GEMISCHE
MELANGES DE MATERIAUX DURCISSABLES PAR EXPOSITION A L'ATMOSPHERE

(30) Priority: 13.11.1996 GB 9623568; 31.01.1997 GB 9702014
(43) Date of publication of application: 24.11.1999
(73) Proprietor: Cairn Holdings (UK), Carrington, Manchester M31 4YR (GB)
(72) Inventor: POLLITT, Clifford, Bruce, Thelwall, Warrington WA4 3JU (GB)
(74) Representative: Ajello, Michael John
(86) International application number: PCT/GB1997/003125
(87) International publication number: WO 1998/021159

(56) References cited:
- EP-A- 0 146 098
- EP-A- 0 294 501
- DE-A- 4 101 032
- DE-C- 4 035 359
- DATABASE WPI Section PQ, Week 8623 Derwent Publications Ltd., London, GB; Class Q31, AN 86-148990 XP002058244 & SU 1 189 745 A (GRISHAEV I G)

## Description

THIS INVENTION relates to mixtures of materials.

According to the present invention there is provided a mixture which is settable upon exposure to atmosphere, comprising polybutadiene, a flow-enhancing hydrocarbon solvent, and dry sand; characterised in that the dry sand has a moisture content no greater than that of kiln-dried sand.

Two examples of flow-enhancing liquids are benzene (octane 140 to 165), and aliphatic hydrocarbons of the latter. Examples are low aromatic, special boiling point 40/65 to 140/165; special boiling point 40/65 to 140/165 sold by Shell Chemicals U.K. Limited; D type aliphatic hydrocarbons; and BASF 125 sold by BASF.

The mixture is not adhesive, that is it is not tacky to the touch and can, for example, be placed on laid tiles and paving and swept into the gaps using a brush or the like or placed directly into the gaps between the tiles to act as a filler without sticking to the surface of the tiles.

The particles in the sand may be of uniform size or different sizes.

There may be additions, for example colourants and/or reinforcing material e.g. synthetic or carbon fibres.

A typical mixture, has by volume of the total mixture of polybutadiene, flow-enhancer and sand:-
2 to 4% polybutadiene
0.1 to 0.4% benzine (octane 140 to 165)
Balance % silica sand

The mixture may be bagged so as to be contained in an essentially oxygen-free atmosphere.

The invention includes paving, flooring and wall elements secured or spaced apart by said mixture when set.

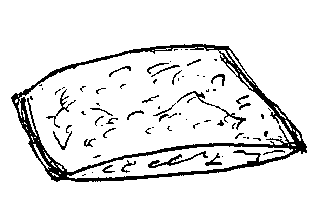

The invention may be performed in various ways and some specific embodiments with possible modifications will now be described by way of example with reference to the accompanying drawing which shows a bag containing a mixture.

The invention provides a mixture which is settable on exposure to atmosphere (oxygen) and can be used indoors or outdoors for use as a screed or for pointing paving or flooring e.g. stones, cobbles, setts, tiles, concrete or clay or stone slabs; or for pointing wall tiles or bricks.

In general the mixture comprises polybutadiene, a flow-enhancing hydrocarbon solvent and dry sand. The polybutadiene is in liquid form.

The dry sand, may, for example comprise kiln-dried sand.

The term dry sand includes sand which has been kiln dried and has then absorbed water from the atmosphere.

A particularly suitable form of liquid polybutadiene is that sold under the name Univest-S by Huls Aktiengesselschaft of Marl, Germany, and ideally occupies the mixture in an amount of between 1.5% and 6% by volume.

A particularly preferred sand is kiln dried silica sand of special fraction size, (which may have absorbed moisture from the atmosphere).

Examples of suitable mixtures are:-

| | | | |
|---|---|---|---|
| 1. | 2% - 4% | By volume | Polybutadiene |
| | 0.1 - 0.4% | By volume | Aroma free Benzene (Octane 140-165) |
| | Balance % | By volume | Kiln dried silica sand special fraction size |
| | | | |
| 2. | 2% - 4% | By volume | Polybutadiene |
| | 0.1 - 0.4% | By volume | Aroma free benzene 140-165 |
| | 1% - 5% | By volume | Synthetic or carbon fibres |
| | Balance % | By volume | Kiln dried silica sand special fraction size |
| | | | |
| 3. | 2% - 4% | By volume | Polybutadiene |
| | 0.1%-0.4% | By volume | Aroma free Benzene 140-165 |
| | 0.1%-0.5% | By volume | Dry colour pigment |
| | Balance % | | Kiln dried silica sand special fraction size |
| | | | |
| 4. | 2% - 4% | By volume | Polybutadiene |
| | 0.1-0.4% | By volume | Aroma free Benzene (140-165) |
| | 1% - 5% | By volume | Synthetic or carbon fibres |
| | 0.1%-0.5% | By volume | Dry colour pigment |
| | Balance % | | Kiln dried silica sand special fraction size |

The mixing is done quickly and preferably by machine, to avoid or limit any setting which would occur due to heat and exposure to atmospheric oxygen.

After mixing, the mixture is placed in bags or other convenient containers, and vacuum packed to remove oxygen (air) and thus suspend the setting process in a substantially oxygen-free atmosphere until the bag is opened. The mixture may be contained in convenient amounts.

If required, to maintain flexibility in the bag, the extracted air may be replaced by a small volume of an inert gas such as carbon dioxide or nitrogen.

The mixture may be diluted if required, using, for example, vegetable oils.

## Claims

1. A mixture which is settable upon exposure to atmosphere, comprising polybutadiene, a flow-enhancing hydrocarbon solvent, and dry sand; **characterised in that** the dry sand has a moisture content no greater than that of kiln-dried sand.

2. A mixture as claimed in Claim 1, in which the dry sand comprises kiln-dried sand.

3. A mixture as claimed in any preceding claim, in which the polybutadiene is in liquid form.

4. A mixture as claimed in any preceding claim, in which the polybutadiene is provided in an amount of between 1.5% and 6% by volume of the mixture.

5. A mixture as claimed in any preceding claim, diluted with a vegetable oil.

6. A mixture as claimed in any preceding claim bagged in a substantially oxygen-free atmosphere.

7. A mixture as claimed in Claim 6, bagged in an inert gas atmosphere.

## Patentansprüche

1. Mischung, die durch Atmosphäreneinwirkung abbindbar ist, umfassend Polybutadien, ein fließerhöhendes Kohlenwasserstoff-Lösungsmittel und Trockensand;
**dadurch gekennzeichnet, dass** der Trockensand einen Feuchtigkeitsgehalt aufweist, der nicht größer ist als der von im Ofen getrocknetem Sand.

2. Mischung nach Anspruch 1, in welcher der Trockensand im Ofen getrockneten Sand umfasst.

3. Mischung nach einem der vorherigen Ansprüche, in welcher das Polybutadien in flüssiger Form vorliegt.

4. Mischung nach einem der vorherigen Ansprüche, in welcher das Polybutadien in einer Menge von zwischen 1,5 Vol.-% und 6 Vol.-% der Mischung vorhanden ist.

5. Mischung nach einem der vorherigen Ansprüche, verdünnt mit pflanzlichem Oel.

6. Mischung nach einem der vorherigen Ansprüche, eingebeutelt in einer im Wesentlichen sauerstofffreien Atmosphäre.

7. Mischung nach Anspruch 6, eingebeutelt in einer inerten Gasatmosphäre.

## Revendications

1. Mélange qui est durcissable par exposition à l'atmosphère, comprenant du polybutadiène, un solvant d'hydrocarbure améliorant l'écoulement, et du sable sec ; **caractérisé en ce que** le sable sec possède une teneur en humidité n'excédant pas celle du sable séché au four.

2. Mélange selon la revendication 1, dans lequel le sable sec comprend du sable séché au four.

3. Mélange selon l'une quelconque des revendications précédentes, dans lequel le polybutadiène est sous forme liquide.

4. Mélange selon l'une quelconque des revendications précédentes, dans lequel le polybutadiène est fourni dans une quantité entre 1,5 % et 6 % en volume du mélange.

5. Mélange selon l'une quelconque des revendications précédentes, dilué avec une huile végétale.

6. Mélange selon l'une quelconque des revendications précédentes, ensaché dans une atmosphère essentiellement exempte d'oxygène.

7. Mélange selon la revendication 6, ensaché dans une atmosphère de gaz inerte.
